# EUROPEAN PATENT APPLICATION

(11) **EP 4 362 514 A1**
(43) Date of publication of application: **01.05.2024**
(21) Application number: 21947212.3
(22) Date of filing: 25.06.2021
(51) Int. Cl.: H04W 8/24, H04W 4/06, H04W 76/40, H04W 28/04

(54) **TERMINAL AND WIRELESS COMMUNICATION METHOD**

(71) Applicant: NTT DOCOMO, INC., Tokyo 100-6150 (JP)
(72) Inventor: YOSHIOKA Shohei, Tokyo 100-6150 (JP); MATSUMURA Yuki, Tokyo 100-6150 (JP); NAGATA Satoshi, Tokyo 100-6150 (JP)
(74) Representative: Hoffmann Eitle
(86) International application number: PCT/JP2021/024246
(87) International publication number: WO 2022/269933

(57) **Abstract**

A terminal comprises: a reception unit that receives data via a downlink channel in data distribution for a plurality of terminals; and a control unit that executes, when a number of the downlink channel exceeds a threshold in a specific time interval, a specific reception processing related to the downlink channel having the number less than or equal to the threshold, wherein the control unit that determines downlink channel to be received by the specific reception processing based on a specific criterion.

## Description

### [Technical Field]

The present disclosure relates to a terminal and a radio communication method corresponding to a multicast/broadcast service.

### [Background Art]

The 3rd Generation Partnership Project (3GPP) has specified the 5th generation mobile communication system (Also called 5G, New Radio (NR), or Next Generation (NG)) and is also in the process of specifying the next generation called Beyond 5G, 5G Evolution or 6G.

Release 17 of the 3GPP covers simultaneous data transmission (also called delivery) services (tentatively called Multicast and Broadcast Services (MBS)) to specific or unspecified terminals (User Equipment, UE) in NR (Non-Patent Literature 1).

For example, MBS is considering scheduling of UE groups that are subject to services. It was agreed to define the ability of the UE to receive the number of PDSCH (Physical Downlink Shared Channel) that the UE can receive in a given time interval. PDSCH is assumed to be unicast (PDSCH) transmitted by unicast and multicast (PDSCH) transmitted by multicast.

### [Citation List]

### [Non-Patent Literature]

[Non-Patent Literature 1]
"New Work Item on NR support of Multicast and Broadcast Services," RP-193248, 3GPP TSG RAN Meeting #86, 3GPP, December 2019

### [Summary of Invention]

Against this background, the inventors and others, as a result of careful examination, noticed that a case in which PDSCH exceeding the number of PDSCH (unicast/multicast) that can be received by the UE is transmitted in a specific time interval should be assumed, and found it necessary to define the operation of the UE in such a case.

Therefore, the present invention has been made in view of such a situation, and it is an object of the present invention to provide a terminal and a radio communication method capable of appropriately receiving PDSCH even in a case in which PDSCH exceeding the number of PDSCH (unicast/multicast) that can be received by the UE is transmitted in a specific time interval.

An aspect of the disclosure is a terminal comprising: a reception unit that receives data via a downlink channel in data distribution for a plurality of terminals; and a control unit that executes, when a number of the downlink channel exceeds a threshold in a specific time interval, a specific reception processing related to the downlink channel having the number less than or equal to the threshold, wherein the control unit that determines downlink channel to be received by the specific reception processing based on a specific criterion.

An aspect of the disclosure is a radio communication method comprising: a step A of receiving data via a downlink channel in data distribution for a plurality of terminals; and a step B of executing, when a number of the downlink channel exceeds a threshold in a specific time interval, a specific reception processing related to the downlink channel having the number less than or equal to the threshold, wherein the step A includes a step of determining downlink channel to be received by the specific reception processing based on a specific criterion.

### [Brief Description of Drawings]

[FIG. 1] FIG. 1 is an overall schematic diagram of the radio communication system 10.
[FIG. 2] FIG. 2 shows a frequency range used in the radio communication system 10.
[FIG. 3] FIG. 3 shows a configuration example of a radio frame, a sub-frame and a slot used in the radio communication system 10.
[FIG. 4] FIG. 4 shows a functional block configuration diagram of the UE200.
[FIG. 5] FIG. 5 shows a functional block configuration diagram of the gNB100.
[FIG. 6] FIG. 6 shows a configuration example of the PTM transmission system 1 and the PTM transmission system 2.
[FIG. 7] FIG. 7 shows an operation of the radio communication system 10.
[FIG. 8] FIG. 8 shows an example of a hardware configuration of the gNB100 and the UE200.

### [Modes for Carrying out the Invention]

Exemplary embodiments of the present invention are explained below with reference to the accompanying drawings. The same functions and structures are denoted by the same or similar reference numerals, and their descriptions are omitted accordingly.

### [Embodiments]

### (1) Overall schematic configuration of the radio communication system

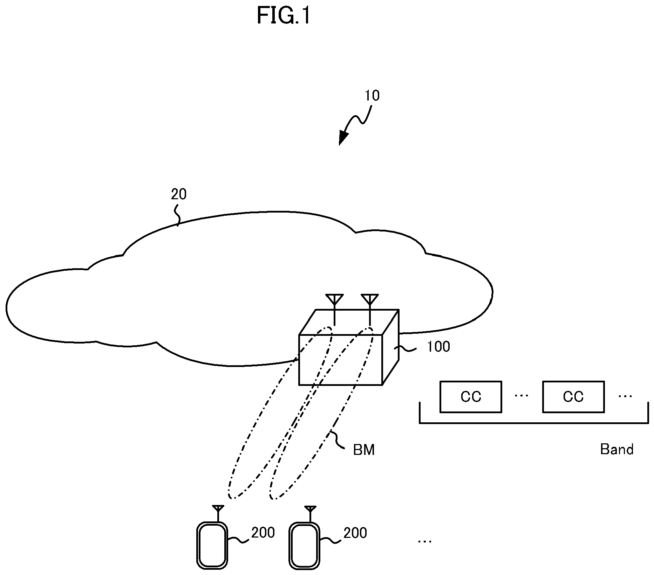

FIG. 1 is an overall schematic configuration diagram of the radio communication system 10 according to an embodiment, the radio communication system 10 is a radio communication system according to 5G New Radio (NR) and includes a Next Generation-Radio Access Network 20 (hereinafter referred to as NG-RAN20 and a terminal 200 (UE (User Equipment) 200).

The radio communication system 10 may be a radio communication system according to a system called Beyond 5G, 5G Evolution or 6G.

The NG-RAN20 includes a base station 100 (gNB10000). The specific configuration of the radio communication system 10 including the number of the gNB100 and the UE200 is not limited to the example shown in FIG. 1.

The NG-RAN20 actually includes a plurality of NG-RAN Nodes, specifically a gNB (or ng-eNB), connected to a core network (5GC, not shown) according toto 5G. Note that the NG-RAN20 and the 5GC may be referred to simply as "networks ".

The gNB100 is a radio base station in accordance with 5G and performs radio communication in accordance with the UE200 a and 5G. The gNB100 and the UE200 can support Massive MIMO (Multiple-Input Multiple-Output), which generates a more directional beam BM by controlling radio signals transmitted from multiple antenna elements; Carrier Aggregation (CA), which uses multiple component carriers (CCs) bundled together; and Dual Connectivity (DC), which communicates to two or more transport blocks simultaneously between the UE and each of two NG-RAN Nodes.

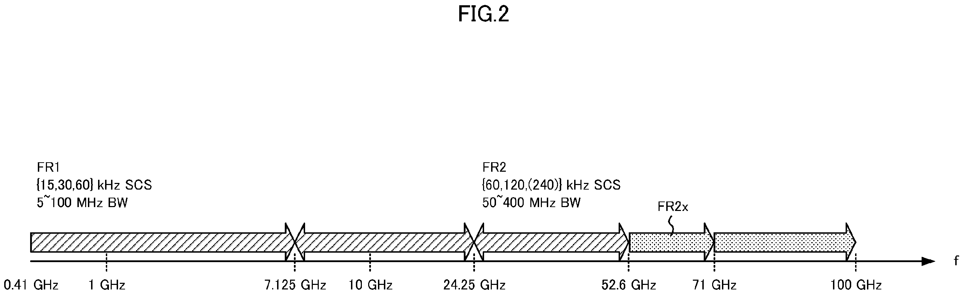

The radio communication system 10 also supports multiple frequency ranges (FRs). FIG. 2 shows the frequency ranges used in radio communication system 10.

As shown in FIG. 2, the radio communication system 10 corresponds to FR1 FRand FR2. The frequency bands of each FR are as follows.
▪FR1:410 MHz -7.125 GHz
▪FR2:24.25 GHz~52.6 GHz

FR1 uses 15, 30 or 60 kHz sub-carrier spacing (SCS) and may use a 5~100 MHz bandwidth (BW). FR2 is higher frequency than FR1 and may use 60 or 120 kHz (may include 240 kHz) SCS and may use a 50~400 MHz bandwidth (BW) .

SCS may be interpreted teas numerology. Numerology is defined in 3GPP TS38.300 and corresponds to one subcarrier interval in the frequency domain.

In addition, the radio communication system 10 corresponds to a higher frequency band than the frequency band of FR2. Specifically, the radio communication system 10 corresponds to a frequency band exceeding 52.6 GHz and up to 71 GHz or 114.25 GHz. Such a high frequency band may be referred to as "FR 2 x" for convenience.

In order to solve the problem that the influence of phase noise increases in the high frequency band, a cyclic prefix-orthogonal frequency division multiplexing (CP-OFDM)/discrete Fourier transform-spread (DFT-S-OFDM) with a larger sub-carrier spacing (SCS) may be applied when a band exceeding 52H.6 GHz is used.

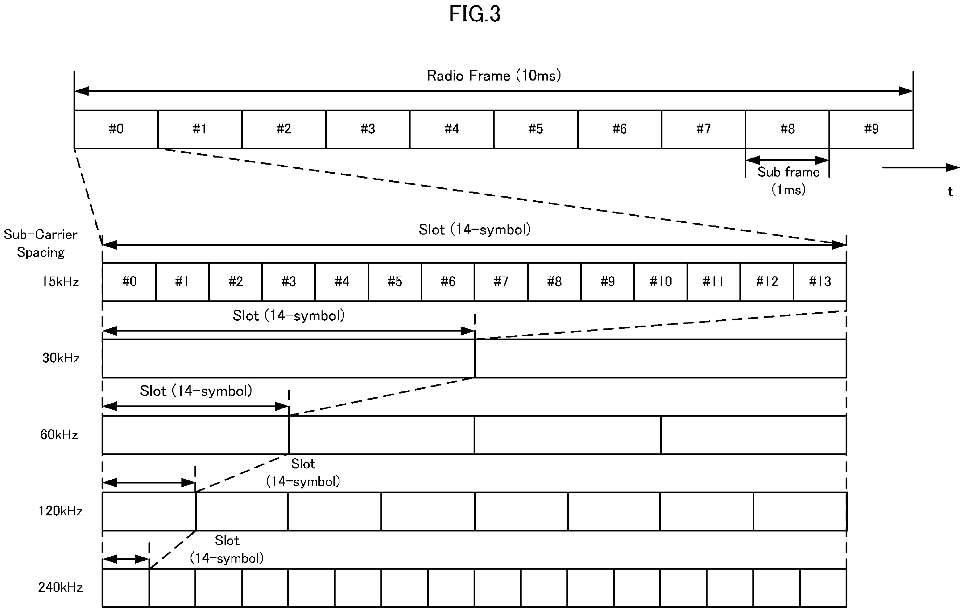

FIG. 3 shows a configuration example of a radio frame, a sub-frame and a slot used in the radio communication system 10.

As shown in FIG. 3, a slot consists of 14 symbols, and the larger (wider) the SCS, the shorter the symbol per period (and slot period). The SCS is not limited to the interval (frequency) shown in FIG. 3. For example, 480 kHz, 960 kHz, and the like may be used.

The number of symbols constituting 1 slot may not necessarily be 14 symbols (For example, 28, 56 symbols). Furthermore, the number of slots per subframe may vary depending on the SCS.

Note that the time direction (t) shown in FIG. 3 may be referred to as a time domain, symbol period, symbol time, etc. The frequency direction may be referred to as a frequency domain, resource block, subcarrier, bandwidth part (BWP), etc.

A DMRS is a type of reference signal and is prepared for various channels. In this context, unless otherwise specified, a DMRS for a downlink data channel, specifically a PDSCH (Physical Downlink Shared Channel), may be used. However, a DMRS for an uplink data channel, specifically a PUSCH (Physical Uplink Shared Channel), may be interpreted in the same way as a DMRS for a PDSCH.

The DMRS may be used for channel estimation in a device, e.g., UE200, as pas rt of a coherent demodulation. The DMRS may be present only in the resource block (RB) used for PDSCH transmission.

The DMRS may have more than one mapping type. Specifically, the DMRS may have a mapping type A and a mapping type B. In a mapping type A, the first DMRS is located in the second or third symbol of the slot. In a mapping type A, the DMRS may be mapped relative to the slot boundary regardless of where the actual data transmission is initiated in the slot. The reason why the first DMRS is placed in the second or third symbol of the slot may be interpreted as placing the first DMRS after the control resource sets (CORESET).

In mapping type B, the first DMRS may be placed in the first symbol of the data allocation. That is, the location of the DMRS may be given relative to where the data is located, rather thana relative to the slot boundary.

The DMRS may also have more than one type. Specifically, the DMRS may have Type 1 and Type 2. Type 1 and Type 2 differ in the maximum number of mapping and orthogonal reference signals in the frequency domain. Type 1 can output up to four orthogonal signals in single-symbol DMRS, and Type 2 can output up to eight orthogonal signals in double-symbol DMRS.

(2) Radio communication system functional block configuration Next, a functional block configuration of the radio communication system 10 will be described.

First, a functional block configuration of the UE200 will be described.

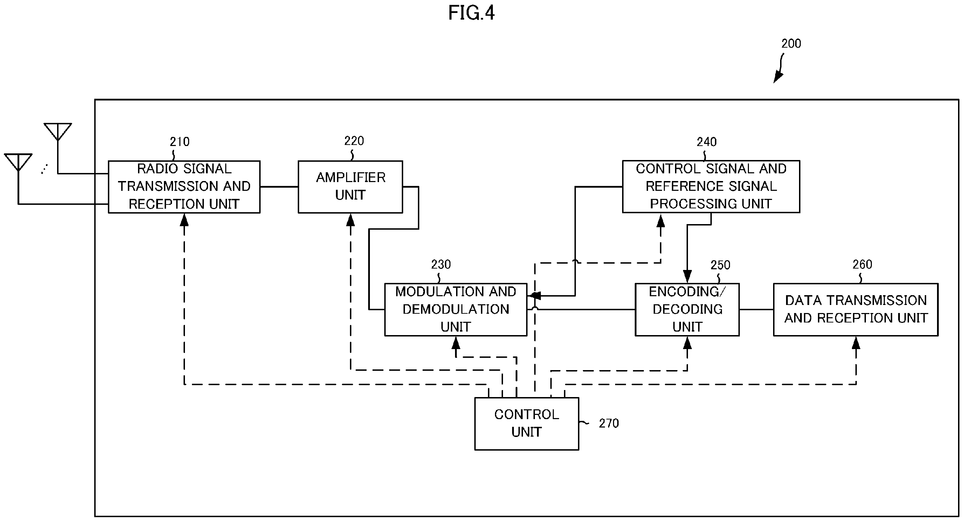

FIG. 4 is a functional block configuration diagram of the UE200. As shown in FIG. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with the NR. the radio signal transmission and reception unit 210 corresponds to a Massive MIMO, a CA using a plurality of CCs bundled together, and a DC that simultaneously communicates between a UE and each of two NG-RAN Nodes.

The amplifier unit 220 is composed of a PA (Power Amplifier)/LNA (Low Noise Amplifier) or the like. the amplifier unit 220 amplifies the signal output from the modulation and demodulation unit 230 to a predetermined power level. the amplifier unit 220 amplifies the RF signal output from radio signal transmission and reception unit 210.

The modulation and demodulation unit 230 performs data modulation/demodulation, transmission power setting, resource block allocation, etc. for each predetermined communication destination (gNB100 or other gNB). In the modulation and demodulation unit 230, Cyclic Prefix-Orthogonal Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example a radio resource control layer (RRC) control signal. the control signal and reference signal processing unit 240 also transmits various control signals to the gNB100 via a predetermined control channel.

The control signal and reference signal processing unit 240 executes processing using a reference signal (RS) such as a demodulation reference signals (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel may include a control channel and a data channel. The control channel may include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channel may also include PDSCH (Physical Downlink Shared Channel) and PUSCH (Physical Uplink Shared Channel). Data means data transmitted over a data channel. A data channel may be read as a shared channel.

Here, the control signal and reference signal processing unit 240 may receive downlink control information (DCI). The DCI includes existing fields for storing DCI Formats, Carrier indicator (CI), BWP indicator, Frequency Domain Resource Allocation (FDRA), Time Domain Resource Allocation (TDRA), Modulation and Coding Scheme (MCS), HPN (HARQ Process Number), New Data Indicator (NDI), Redundancy Version (RV), and the like.

The value stored in the DCI Format field is an information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by an information element (Bandwidth Part-Config) contained in the RRC message. The value stored in the FDRA field is an information element that specifies the frequency domain resource to which the DCI applies. The frequency domain resource is specified by the value stored in the FDRA field and the information element (RA Type) contained in the RRC message. The value stored in the TDRA field is an information element that specifies the time domain resource to which the DCI applies. The time domain resource is specified by the value stored in the TDRA field and the information element (pdsch-TimeDomainAllocationList, pusch-TimeDomainAllocationList) contained in the RRC message. The time domain resource may be specified by the value stored in the TDRA field and the default table. The value stored in the MCS field is an information element that specifies the MCS to which the DCI applies. The MCS is specified by the value stored in the MCS and the MCS table. The MCS table may be specified by an RRC message or specified by RNTI scrambling. The value stored in the HPN field is an information element that specifies the HARQ Process to which the DCI is applied. The value stored in the NDI is an information element that identifies whether the data to which the DCI is applied is first-time data. The value stored in the RV field is an information element that specifies the redundancy of the data to which the DCI is applied.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. the encoding/decoding unit 250 decodes the data output from the modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). the data transmission and reception unit 260 also performs error correction and retransmission control of data based on HARQ (Hybrid Automatic Repeat Request).

In the embodiment, the data transmission and reception unit 260 constitutes a reception unit that receives data via a downlink channel in data distribution for a plurality of terminals. Data distribution for a plurality of terminals may be referred to as Multicast and Broadcast Services (MBS). The downlink channel may include multicast (PDSCH) transmitted by multicast and unicast (PDSCH) transmitted by unicast. In the following, multicast (PDSCH) and unicast (PDSCH) are collectively referred to as multicast/unicast (PDSCH). The reception of multicast/unicast (PDSCH) may be read as the reception of data via multicast/unicast (PDSCH).

The control unit 270 controls each functional block that constitutes UE200. In an embodiment, the control unit 270 constitutes a control unit that executes, when the number of downlink channels (PDSCH) exceeds the threshold during a specific time interval, a specific reception processing related to PDSCH having the number less than or equal to the threshold. The control unit 270 determines the PDSCH to be received in the specific reception processing based on the specified criteria.

The specific time interval may be defined by a slot, an absolute time, or a symbol. The specific time interval may be read as the same slot, as a specified time or period, or as the same symbol.

The threshold is a threshold that defines the maximum number of multicast/unicast (PDSCH) that the UE200 can receive in a specified period. The threshold may be a value defined by the UE200 capability (UE Capability) that has already been defined in Release 15/Release 16. PDSCH (multicast) may be counted as PDSCH (unicast). PDSCH (multicast) may be Group-common PDSCH (s), described below. In the following, the threshold may be referred to as the Maximum number.

The threshold may be defined for each CC, for one or more CCs included in a frequency band, for one or more CCs belonging to a cell group, or for all frequency bands.

Here, a case in which the number of PDSCH exceeds the Maximum number in the specific time interval may include the following cases.

Case 1 may be a case in which UE200 reports the UE Capability (Maximum number) to gNB100, and the number of PDSCH (multicast/unicast) exceeding the Maximum number in the specific time interval is scheduled by gNB100. The scheduled PDSCH (multicast/unicast) may include a Dynamic scheduled PDSCH with PDCCH (DCI), a Semi-Persistent PDSCH (SPS), and both a Dynamic scheduled PDSCH and an SPS PDSCH.

Case 2 may be a case where 2 or more PDSCH (multicast/unicast) are scheduled by gNB100 with UE200 not reporting UE Capability (Maximum number) to gNB100 or UE200 reporting to gNB100 that it can receive 1 PDSCH (multicast) or 1 PDSCH (unicast). The scheduled PDSCH (multicast/unicast) may include Dynamic scheduled PDSCH with PDCCH (DCI), may include SPS PDSCH, and may include both Dynamic scheduled PDSCH and SPS PDSCH.

Second, the functional block configuration of gNB100 will be described.

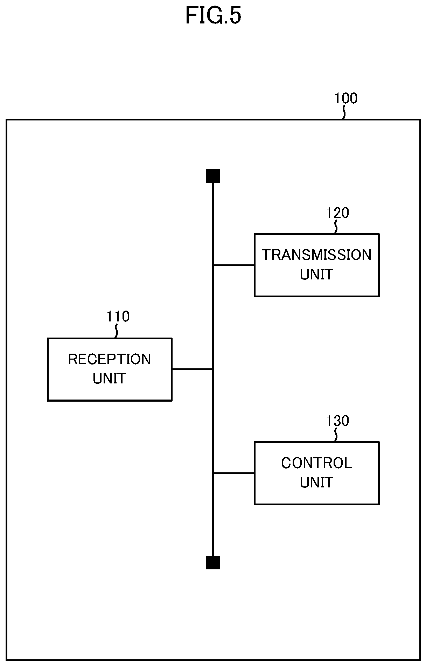

FIG. 5 is a functional block diagram of the gNB100. As shown in FIG. 5, the gNB100 has a reception unit 110, a transmission unit 120, and a control unit 130.

The reception unit 110 receives various signals from the UE200. The reception unit 110 may receive UL signals via PUCCH or PUSCH.

The transmission unit 120 transmits various signals to the UE200. The transmission unit 120 may transmit DL signals via PDCCH or PDSCH. In embodiments, the transmission unit 120 may transmit multicast/unicast (PDSCH) at the MBS. Transmission of multicast/unicast (PDSCH) may be read as transmission of data via multicast/unicast (PDSCH).

The control unit 130 controls the gNB100. In the embodiment, the control unit 130 may assume that when the number of the multicast/unicast (PDSCH) exceeds the threshold during the specific time interval, the UE200 executes the specific reception processing related to the multicast/unicast (PDSCH) having the number less than or equal to the threshold. The control unit 130 may assume that the UE200 determines the PDSCH to be received during specific reception processing based on specific criteria.

### (3) Provision of MBS

The radio communication system 10 may provide Multicast and Broadcast Services (MBS).

For example, in a stadium or hall, a large number of UE200 s may be located in a certain geographic area and a large number of UE200 s may simultaneously receive the same data. In such a case, the use of MBS rather than unicast is effective.

Unicast may be interpreted as communication performed 1: 1 with the network by specifying a specific UE200 (identification information specific to the UE200 may be specified).

Multicast may be interpreted as communication performed 1: 1 with the network by specifying a specific plurality of UE200 (identification information for multicast may be specified). As a result, the number of UE200 that receive the received multicast data may be 1.

The broadcast may be interpreted as a communication between all UE200 and the network in an unspecified number. The multicast/broadcast data may have the same copied content, but some content, such as headers, may be different. The multicast/broadcast data may also be transmitted (distributed) simultaneously, but does not necessarily require strict concurrency, and may include propagation delays and/or processing delays within the RAN node.

Note that the state of the radio resource control layer (RRC) of the target UE200 may be either an idle state (RRC idle), a connected state (RRC connected), or another state (For example, the inactive state). The inactive state may be interpreted as a state in which some settings of the RRC are maintained.

MBS assumes the following three methods for scheduling multicast/broadcast PDSCH, specifically scheduling MBS packets (which may be read as data). RRC connected UE may be read as RRC idle UE or RRC inactive UE.
▪PTM Transmission Method 1 (PTM-1):
   ▪Schedule group-common PDSCH using group-common PDCCH (Physical Downlink Control Channel) for MBS group of RRC connected UE.
   ▪CRC and PDSCH of PDCCH are scrambled by group-common RNTI (Radio Network Temporary Identifier, may be referred to as G-RNTI).
▪PTM Transmission Method 2 (PTM-2):
   ▪Schedule a group-common PDSCH with a terminal-specific PDCCH for the MBS group of the RRC connected UE.
   ▪The CRC of the PDCCH is scrambled by the UE-specific RNTI.
   ▪The PDSCH is scrambled by the group-common RNTI.
   ▪PTP Transmission Method:
      ▪Schedule UE-specific PDSCH with UE-specific PDCCH for RRC connected UE.
      ▪CRC and PDSCH of PDCCH are scrambled by UE-specific RNTI. This may mean that MBS packets are transmitted by unicast.

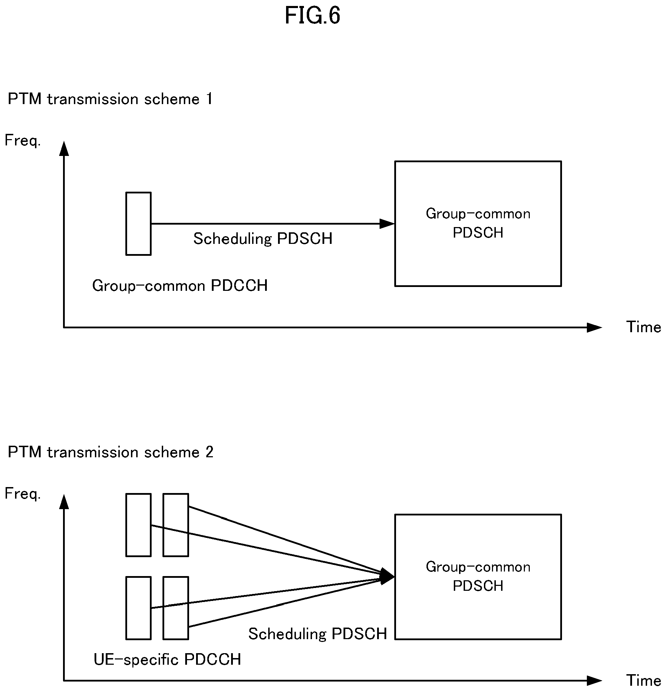

FIG. 6 shows a configuration example of PTM transmission method 1 and PTM transmission method 2. The UE-specific PDCCH/PDSCH can be identified by the target UE, but it need not be identified by other UEs in the same MBS group. The group-common PDCCH/PDSCH is transmitted at the same time/frequency resource and can be identified by all UEs in the same MBS group. The names of the PTM transmission methods 1 and 2 are tentative and may be called by different names as long as the operations described above are performed.

In point-to-point (PTP) distribution, the RAN node may wirelessly distribute individual copies of MBS data packets to individual UEs. In point-to-multipoint (PTM) distribution, the RAN node may wirelessly distribute a single copy of the MBS data packet to a set of UEs.

In order to improve the reliability of MBS, the following two feedback methods are envisaged for HARQ (Hybrid Automatic repeat request) feedback, specifically HARQ feedback for multicast/broadcast PDSCH.
▪Option 1: Feedback of both ACK and NACK (ACK/NACK feedback)
▪A UE that successfully receives or decrypts PDSCH sends an ACK
▪A UE that fails to receive or decrypt PDSCH sends a NACK
▪PUCCH (Physical Uplink Control Channel) resource configuration: PUCCH-Config can be configured for multicast
▪PUCCH resource: Shared/orthogonal between UEs depends on the network configuration
▪HARQ-ACK CB (codebook): Supports type-1 and type-2 (CB decision algorithm specified in 3GPP TS 38.213)
▪multiplexing: enable unicast or multicast
▪Option 2: NACK-only feedback
▪A UE that successfully receives or decrypts PDSCH does not send an ACK (does not send a response)
▪A UE that fails to receive or decrypt PDSCH sends a NACK
▪For a given UE, PUCCH resource settings can be configured separately by unicast or group cast (multicast)

Note that ACK may be called positive acknowledgement and NACK may be called negative acknowledgement. HARQ may be called automatic resend request.

Enable/disable Option 1 or Option 2 may be either:
▪RRC and Downlink Control Information (DCI)
▪RRC only

In addition, the following is expected for semi-persistent scheduling (SPS) for multicast/broadcast PDSCH:
▪Adopts SPS group-common PDSCH
▪Multiple SPS group-common PDSCH can be configured for UE capability
▪HARQ feedback for SPS group-common PDSCH is possible
▪At least activation/deactivation via group-common PDCCH (downlink control channel) is possible

Note that deactivation may be replaced with other synonymous terms such as release. For example, activation may be replaced with start, start, trigger, etc., and deactivation may be replaced with end, stop, etc.

SPS is a scheduling used as a contrast to dynamic scheduling and may be referred to as semi-fixed, semi-persistent or semi-persistent scheduling and may be interpreted as Configured Scheduling (CS).

Scheduling may be interpreted as the process of allocating resources to transmit data. Dynamic scheduling may be interpreted as the mechanism by which all PDSCH are scheduled by DCI (For example, DCI1_0, DCI1_1, or DCI1_2). SPS may be interpreted as the mechanism by which PDSCH transmissions are scheduled by higher layer signaling, such as RRC messages.

Also, for the physical layer, there may be a scheduling category of time domain scheduling and frequency domain scheduling.

Also, multicast, group cast, broadcast, and MBS may be interchanged. Multicast PDSCH, PDSCH scrambled by group common RNTI may be read as each other.

In addition, data and packet terms may be read as each other and may be interpreted as synonymous with terms such as signal, data unit, etc. Transmission, reception, transmission and distribution may be read as each other.

### (4) Issues

In the case where unicast (PDSCH) is assumed as in the prior art, scheduling of unicast (PDSCH) exceeding the maximum number can be avoided on the network side. Therefore, it is not necessary to specify the operation of UE200 for scheduling unicast (PDSCH) exceeding the maximum number.

On the other hand, when multicast (PDSCH) is assumed, inventors noticed that it is difficult to avoid scheduling unicast (PDSCH) exceeding the maximum number on the network side. Cases in which PDSCH (multicast) is assumed include cases in which two or more PDSCH (multicast) are scheduled, and cases in which PDSCH (unicast) and PDSCH (multicast) are scheduled.

Specifically, a case in which 1 PDSCH (unicast) and 1 PDSCH (multicast) can be received by the UE200 at the specific time interval, and 2 PDSCH (multicast) can be received by the UE200 at the specific time interval will be described with examples. However, it is assumed that 1 PDSCH (unicast) and 2 PDSCH (multicast) cannot be received by the UE200 at the specific time interval. In such a case, assuming the scheduling of 1 PDSCH (unicast) and 2 PDSCH (multicast) at the specific time interval, the network side may execute the following options.

In option 1, the network side may postpone the scheduling of PDSCH (unicast). However, it is not appropriate to postpone the scheduling of PDSCH (unicast) when the delay or reliability requirements of data (unicast data) via PDSCH (unicast) are severe.

In option 2, the network side may postpone the scheduling of PDSCH (multicast). However, it is also not appropriate to postpone scheduling PDSCH (multicast) because it affects other UE200 that want to receive multicast data through PDSCH (multicast).

Furthermore, because the maximum number may be different for each UE200, if trying to avoid scheduling the multicast/unicast (PDSCH) that exceed the maximum number for all UE200, it may cause great reduction of delay characteristics, reliability, and throughput of multicast/unicast (PDSCH).

In view of these issues, inventors have identified the need to define the operation of UE200 assuming scheduling of multicast/unicast (PDSCH) s that exceed the maximum number for the specific time interval.

### (5) Specific reception processing

As described above, when the number of multicast/unicast (PDSCH) exceeds the Maximum number during the specific time interval, the UE200 performs specific reception processing related to multicast/unicast (PDSCH) having the number less than or equal to the Maximum number. The UE200 determines the multicast/unicast (PDSCH) received by the specific reception processing based on specific criteria.

For example, if the maximum number is represented by "X " and the number of multicast/unicast (PDSCH) scheduled in a particular time interval is represented by" Y," the UE200 receives X PDSCH or less without receiving Y-X PDSCH or more. The specified criteria may be as follows:

### (5.1) Priority of the downlink channel

The specific criteria may be defined based on the priority of the downlink channel (multicast/unicast (PDSCH)). The priority may be specified by PDCCH (DCI), set at a higher layer (such as RRC), or predetermined by the radio communication system 10. The priority may include two levels of priority (High/Low) or more than three levels of priority. For example, the UE200 may receive a high priority PDSCH without receiving a low priority PDSCH.

With such a configuration, a high priority PDSCH can be preferentially received, and degradation of delay characteristics or reliability can be suppressed. The gNB100 can also assume which PDSCH is received by the UE200.

### (5.2) Downlink channel destination specification method

The specification criteria may be defined based on the downlink channel (multicast/unicast (PDSCH)) destination specification method. The destination specification method may include multicast and unicast. For example, the UE200 may receive PDSCH (unicast) without receiving PDSCH (multicast). Alternatively, the UE200 may receive PDSCH (multicast) without receiving PDSCH (unicast). Whether PDSCH (multicast) or PDSCH (unicast) is received (or do not receive) may be set at a higher layer (such as RRC) or may be predetermined by the radio communication system 10.

With such a configuration, since the destination specification method of PDSCH to be received by the UE200 is clear and the reception resource of PDSCH is also clear, the influence on the reception processing and decoding processing of the UE200 can be suppressed. The gNB100 can also assume which PDSCH is received by the UE200.

### (5.3) Downlink channel reception resources

Specific criteria may be defined based on the downlink channel (multicast/unicast (PDSCH)) reception resources. The reception resources may be defined by the PDSCH start timing (For example, the start symbol) or by the PDSCH resource length (For example, the number of symbols). For example, the UE200 may receive a PDSCH with an early start timing without receiving a PDSCH with a late start timing. Alternatively, the UE200 may receive a PDSCH with a late start timing without receiving a PDSCH with an early start timing. For example, the UE200 may receive a PDSCH with a long resource length without receiving a PDSCH with a short resource length. Alternatively, the UE200 may receive a PDSCH with a short resource length without receiving a PDSCH with a long resource length.

According to such a configuration, since the reception resource to be received by the UE200 is clear, the influence on the reception processing and the decoding processing of the UE200 can be suppressed. In addition, the gNB100 can assume which PDSCH will be received by the UE200.

### (5.4) Downlink channel scheduling information reception resource

The specific criteria may be defined based on parameters related to the downlink channel (multicast/unicast (PDSCH)) scheduling information (DCI). The parameters may be defined by the start timing (For example, the start symbol) of the PDCCH including the DCI. The parameters may be defined by one or more parameters selected from among the Search space, CORSET, CCE Index, and CRC scrambling RNTI of the PDCCH. For example, the UE200 may not receive a PDSCH scheduled by a PDCCH with a late start timing (DCI), but may receive a PDSCH scheduled by a PDCCH with an early start timing (DCI). Alternatively, the UE200 may not receive a PDSCH scheduled by a PDCCH with an early start timing (DCI), but may receive a PDSCH scheduled by a PDCCH with a late start timing (DCI).

According to such a configuration, since the PDCCH (DCI) for scheduling the PDSCH to be received by the UE200 is clear and the reception resource of the PDSCH is also clear, the influence on the reception processing and the decoding processing of the UE200 can be suppressed. In addition, the gNB100 can assume which PDSCH will be received by the UE200.

### (5.5) How to schedule a downlink channel

Specific criteria may be defined based on how to schedule a downlink channel (multicast/unicast (PDSCH)). The methods are dynamic scheduling and semi-persistent scheduling (SPS).; Semi-Persistent Scheduling). For example, the UE200 may receive Dynamic scheduled PDSCH without receiving SPS PDSCH. Alternatively, it may receive SPS PDSCH without receiving Dynamic scheduled PDSCH. Whether to receive Dynamic scheduled PDSCH or SPS PDSCH (or do not receive) may be set in an upper layer (such as RRC) or may be predetermined in the radio communication system 10.

According to such a configuration, since the method for scheduling the PDSCH to be received by the UE200 is clear and the reception resource of the PDSCH is also clear, the influence on the reception processing and the decoding processing of the UE200 can be suppressed. In addition, the gNB100 can assume which PDSCH will be received by the UE200.

### (5.6) Information on the management of the reception process or reception buffer for the downlink channel

The specific condition may be defined based on information on the management of the reception process or reception buffer for the downlink channel (multicast/unicast (PDSCH)). The HARQ process number may be used as information on the management of the reception process or reception buffer. For example, the UE200 may receive a PDSCH corresponding to a specific HARQ process number without receiving a PDSCH corresponding to a HARQ process number other than a specific HARQ process number. Alternatively, the UE200 may receive a PDSCH corresponding to a HARQ process number other than a specific HARQ process number without receiving a PDSCH corresponding to a specific HARQ process number.

With such a configuration, the operation of the upper layer (For example, the MAC layer) with respect to the PDSCH to be received and the PDSCH not to be received by the UE200 is clear, and the reception resources of the PDSCH are also clear, so that the influence on the reception processing and decoding processing of the UE200 can be suppressed. The gNB100 can also assume which PDSCH is received by the UE200.

### (5.7) Combination

Specific conditions may be defined on the basis of the combination of parameters illustrated in (5.1) - (5.6) above. In such a case, the order in which the specific conditions defined on the basis of the parameters illustrated in (5.1) - (5.6) are applied (following: application order) may be specified. For example, the PDSCH received by the UE200 may be determined by applying the specific conditions according to the application order until the number of the PDSCH received by the UE 200 becomes less than or equal to the Maximum number.

### (5.8) Terminal Implementation

The specific conditions may be defined based on the terminal (UE200) implementation. In such a case, the specific conditions defined based on the UE200 implementation may be conditions for receiving multicast/unicast (PDSCH) numbers less than or equal to the Maximum number. Such conditions may be defined by multicast/unicast (PDSCH), which is not received by UE200.

With such a configuration, if the number of multicast/unicast (PDSCH) exceeds the maximum number during the specific time interval, at least 1 or more multicast/unicast (PDSCH) is guaranteed to be received (For example, Maximum number).

### (6) Feedback

As described above, it is assumed that multicast/unicast (PDSCH) is not received in the specific reception processing. The UE200 may execute the following processing as processing related to feedback (HARQ Feedback).

### (6.1) Downlink channel not received by the specific reception processing

The UE200 may send HARQ feedback to the downlink channel (multicast/unicast (PDSCH)) not received by the specific reception processing. As the HARQ feedback, a NACK may be generated and transmitted to the gNB100. In such a case, the UE200 may perform the following processing:

First, the UE200 may determine the timing of the HARQ feedback (e.g. feedback slot) based on the parameters specified in the PDCCH corresponding to the PDSCH not received in the specific reception processing (slot offset, sub-slot offset). The UE200 may determine the timing (e.g. feedback slot) of the HARQ feedback based on the parameters (slot offset, sub-slot offset) set in the upper layer (For example, RRC). The UE200 may determine the timing of the HARQ feedback (e.g. feedback slot) based on the parameters specified by the activation DCI (slot offset, sub-slot offset).

In these cases, the UE200 may apply the parameter (slot offset, sub-slot offset) starting from the last slot of the PDSCH that was not received by the specific reception processing.

Second, the UE200 may determine the resource of the HARQ feedback based on the parameter specified in the PDCCH corresponding to the PDSCH that was not received by the specific reception processing (PUCCH resource). The UE200 may determine the resource of the HARQ feedback based on the parameter (PUCCH resource) set in the upper layer (For example, RRC) .

In addition, the UE200 may use the PUCCH resource specified based on the last DCI format among the PDCCHs (DCI) that schedule PDSCH corresponding to 2 or more HARQ-ACK information as the resource of the HARQ feedback when multiplexing 2 or more HARQ-ACK information in the same PUCCH. The PDCCHs that schedule PDSCH corresponding to the 2 or more HARQ-ACK information may include PDCCHs that schedule PDSCH not received in the specific reception processing.

The final DCI format may be specified as follows. The UE200 has the value of the PDSCH-to-HARQ_feedback timing indicator field (if any), the value of dl-DataToUL-ACK, the value of dl-DataToUL-ACK-r16, or the value of dl-DataToUL-ACKForDCIFormat1_2. Among the DCI formats that specify the same slot for PUCCH transmission, the UE detects the DCI format used for transmitting HARQ-ACK information in PUCCH. The UE200 indexes the detected DCI formats in ascending order across the serving cells indexes in the same PDCCH monitoring occasion, and then indexes them in ascending order across the PDCCH monitoring occasion indexes. The UE200 identifies the last DCI format based on the index attached to the DCI format.

Third, the UE200 may determine the transmission power of the HARQ feedback based on the parameter (TPC command) specified in the PDCCH corresponding to the PDSCH not received in the specific reception processing.

Fourth, the UE200 may store the NACK in the HARQ-ACK information for the PDSCH not received in the specific reception processing when the type-1 HARQ-ACK CB (Code Book) is used.

Fifth, the UE200 may generate the HARQ-ACK CB using the DAI (Downlink Assignment Index) included in the PDCCH corresponding to the PDSCH not received in the specific reception processing when the type-2 HARQ-ACK CB (Code Book) is used, and store the NACK in the HARQ-ACK information for the PDSCH not received in the specific reception processing.

Sixth, the priority of the NACK for the PDSCH not received in the specific reception processing may be specified by the PDCCH corresponding to the PDSCH not received in the specific reception processing, and may be set at a higher layer (For example, RRC). The priority of the NACK may be specified by the activation DCI.

Seventh, the UE200 may transmit a NACK for a PDSCH not received by the specific reception processing when the NACK for the PDSCH not received by the specific reception processing is multiplexed with another UCI or UL-SCH. In other words, when the UE200 does not multiplex the NACK for the PDSCH not received by the specific reception processing with the other UCI or UL-SCH, the UE may not transmit the NACK for the PDSCH not received by the specific reception processing. The other UCI may be other HARQ-ACK information, SR, or CSI. The UL-SCH may be a shared channel (data) transmitted by the PUSCH.

According to such a configuration, the NACK transmission can be executed only when the NACK is multiplexed with another UCI or UL-SCH, thereby suppressing the resources associated with the NACK transmission while avoiding the case where the other UCI or UL-SCH cannot receive the NACK. When the NACK is not multiplexed with another UCI or UL-SCH, the gNB100 can identify the PDSCH that the UE200 could not receive even if the NACK transmission is skipped, and it can be understood that the PDSCH needs to be retransmitted.

8. At least one of HARQ feedback (ACK/NACK feedback) of both ACK and NACK and HARQ feedback (NACK-only feedback) of only NACK may be specified by the PDCCH corresponding to the PDSCH that was not received in the specific reception processing, and may be set in the upper layer (For example, RRC). The priority of NACK may be specified by activation DCI.

9. The UE200 may perform the following operations when LBT (Listen Before Talk) is requested.

For example, the UE200 may perform LBT in the manner specified by the PDCCH corresponding to the PDSCH not received by the specific reception processing.

Alternatively, the UE200 may perform LBT in a manner different from that specified by the PDCCH corresponding to the PDSCH not received by the specific reception processing. The different method may be an already specified method (For example, 3GPP TS37.213). Specifically, the different method may be one of the following: Type2C-ULChannelAccess (clause 4.2.1.2.3 of TS 37.213), Type2A-ULChannelAccess (clause 4.2.1.2.1 of TS 37.213), Type1-ULChannelAccess (clause 4.2.1.1 of TS 37.213), No sensing (clause 4.3 of TS 37.213), 9us sensing within a 25us interval (clause 4.3 of TS 37.213).

The above configuration clarifies the processing of UE200 with respect to HARQ feedback, allows gNB100 to assume the processing of UE200 with respect to HARQ feedback, and improves the reliability of MBS with respect to PDSCH.

### (6.2) Downlink channel received by specific reception processing

The UE200 may transmit HARQ feedback to the downlink channel PDSCH (multicast/unicast) received by specific reception processing without generating HARQ feedback to the downlink channel PDSCH (multicast/unicast) not received by specific reception processing.

In such a case, the UE200 may determine the resource of HARQ feedback based on the parameter (PUCCH resource) specified in the PDCCH corresponding to the PDSCH received by specific reception processing. The UE200 may use the PUCCH resource specified based on the last DCI format among the PUCCHs (DCI) scheduling PDSCH corresponding to 2 or more HARQ-ACK information as the resource of HARQ feedback in the case of multiplexing 2 or more HARQ-ACK information in the same PUCCH. Note that the PDCCH scheduling PDSCH corresponding to the 2 or more HARQ-ACK information may not include the PDCCH scheduling PDSCH not received in the specific reception processing.

### (7) MAC (Medium Access Control) Layer Operation

The UE200 may control the operation of the MAC layer based on the PDSCH not received in the specific reception processing. Specifically, the UE200 may operate based on the DL assignment for the PDSCH not received in the specific reception processing even when the DL-SCH and MAC PDU are not received. For example, the operation of the MAC layer may be that of drx-HARQ-RTT-TimerDL, drx-RetransmissionTimerDL, bwp-InactivityTimer, or sCellDeactivationTimer.

First, UE200 may invoke drx-HARQ-RTT-TimerDL of the corresponding HARQ process at the first symbol after the end of the corresponding transmission carrying DL HARQ feedback. UE200 may suspend drx-RetransmissionTimerDL of the corresponding HARQ process.

Second, UE200 may start/restart the bwp-InactivityTimer associated with the Active DL BWP if one of the following conditions is met: The condition may be that receipt of the PDCCH destined for the C-RNTI is successfully completed when the Random Access procedure associated with the serving cell is not performed or when the Random Access procedure associated with the serving cell is performed.

Third, the UE200 may restart the sCellDeactivationTimer associated with the SCell.

According to these configurations, even if the PDSCH is not received in the specific reception processing, the UE200 performs the operation of the MAC layer on the assumption that the PDSCH is received, so that the influence on the processing such as DRX, invalidation of the BWP, and inactivation of the SCell can be suppressed.

### (8) Retransmission of the PDSCH not received in the specific reception processing

For the existing PDSCH (For example, PDSCH (unicast)), it is specified that the UE200 does not assume the reception of other PDSCH corresponding to the HARQ process until the completion of the transmission of the HARQ-ACK expected for the HARQ process (For example, TS38.214 subclause 5.1). Under these assumptions, the UE200 may assume the following operations:

First, the UE200 may assume the reception of another PDSCH associated with the retransmission of the PDSCH that was not received by the specific reception processing before the transmission of the HARQ feedback to the PDSCH that was not received by the specific reception processing. That is, the UE200 may assume the reception of the PDCCH and the other PDSCH associated with the retransmission of the PDSCH. In such a case, the above provisions do not apply to the specific reception processing.

Second, the UE200 may not assume the reception of another PDSCH associated with the retransmission of the PDSCH not received by the specific reception processing before the transmission of the HARQ feedback to the PDSCH not received by the specific reception processing. In such a case, the foregoing provisions also apply to the specific reception processing.

### (9) Operation of radio communication system

Next, the operation of the radio communication system 10 will be described. Specifically, the operation related to the scheduling of the downlink channel and the HARQ feedback of the channel related to the MBS will be described.

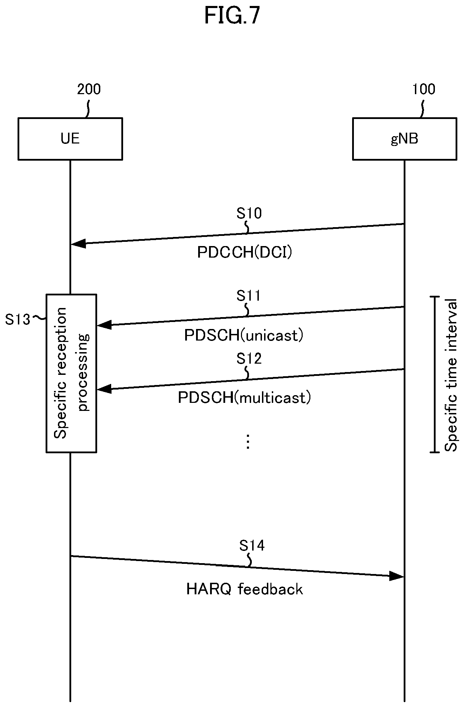

As shown in FIG. 7, in step S10, the gNB100 transmits a PDCCH (DCI).

In step S11, the gNB100 transmits a PDSCH (unicast) at the specific time interval.

In step S12, the gNB100 transmits PDSCH (multicast) at the specific time interval.

In step S13, the UE200 executes the specific reception processing described above. That is, when the number of PDSCH (multicast/unicast) exceeds the Maximum number in the specific time interval, the UE200 executes the specific reception processing related to the PDSCH (multicast/unicast) having the number less than or equal to the Maximum number. The UE200 determines the PDSCH (multicast/unicast) to be received in the specific reception processing based on the specific criteria.

In step S14, the UE200 transmits HARQ feedback to the PDSCH (multicast/unicast). The UE200 may transmit HARQ feedback in the manner described in (6) above.

FIG. 7 illustrates a case in which the PDSCH (unicast) is transmitted in step S11 and the PDSCH (multicast) is transmitted in step S12 for the purpose of simplifying the explanation. However, the embodiment is not limited thereto. Two or more PDSCH (unicast) may be transmitted in the specific time interval, and two or more PDSCH (multicast) may be transmitted in the specific time interval. No PDSCH (unicast) may be transmitted in the specific time interval. The method for scheduling PDSCH (multicast/unicast) is based on dynamic scheduling and semi-continuous scheduling (SPS).; Semi-Persistent Scheduling). Therefore, step S10 may be omitted.

### (10) Operational effects

In the embodiment, when the number of PDSCH (multicast/unicast) exceeds the Maximum number in the specific time interval, the UE200 executes specific reception processing related to the PDSCH (multicast/unicast) having number less than or equal to the Maximum number. The UE200 determines the PDSCH (multicast/unicast) to be received in the specific reception processing based on specific criteria. According to such a configuration, a specific criterion for determining the PDSCH (multicast/unicast) to be received by a specific reception processing is newly defined when the number of PDSCH (multicast/unicast) to be scheduled in the specific time interval exceeds the maximum number. Therefore, the UE200 can appropriately receive the PDSCH, and the gNB100 can assume which PDSCH will be received by the UE200.

### (11) Other Embodiments

Although the contents of the present invention have been described in accordance with the above embodiments, it is obvious to those skilled in the art that the present invention is not limited to these descriptions but can be modified and improved in various ways.

Although not specifically mentioned in the above disclosure, in MBS, PDSCH (unicast) and PDSCH (multicast) may be multiplexed by time division. PDSCH (unicast) may be referred to as TDMed PDSCH (unicast), and PDSCH (multicast) may be referred to as TDMed PDSCH (multicast). MBS may support frequency division multiplexing of TDMed PDSCH (unicast) and DMed PDSCH (multicast), and may support frequency division multiplexing of TDMed PDSCH (multicast).

FIG. 4 and FIG. 5 show blocks of functional units. Those functional blocks (structural components) can be realized by a desired combination of at least one of hardware and software. Means for realizing each functional block is not particularly limited. That is, each functional block may be implemented using a single device that is physically or logically coupled, or two or more devices that are physically or logically separated may be directly or indirectly (For example, using wire, wireless, etc.) connected and implemented using these multiple devices. The functional block may be implemented using the single device or the multiple devices combined with software.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

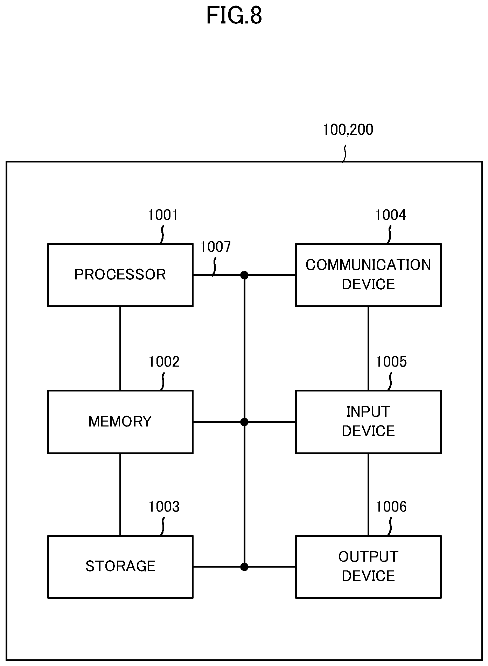

In addition, the above-mentioned gNB100 and UE200 (the device) may function as a computer for processing the radio communication method of the present disclosure. FIG. 8 is a diagram showing an example of the hardware configuration of the device. As shown in FIG. 8, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. The hardware configuration of the device may be configured to include one or more of the devices shown or may be configured without some of the devices.

Each functional block of the device (see FIG. 4) is implemented by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. In addition, the various processes described above may be performed by one processor 1001 or may be performed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random **Access** Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), etc., which may provide some or all of each functional block. For example, the processor 1001 may be implemented by using at least one of these hardware.

The notification of information is not limited to the aspects/embodiments described in the present disclosure and may be carried out using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing steps, sequences, flowcharts, etc., of each of the embodiments/embodiments described in the present disclosure may be reordered as long as there is no conflict. For example, the method described in the present disclosure presents elements of various steps using an exemplary sequence and is not limited to the particular sequence presented.

The specific operation that is performed by the base station in the present disclosure may be performed by its upper node in some cases. It is apparent that in a network consisting of one or more network nodes having a base station, various operations performed for communication with a terminal may be performed by at least one of the base station and other network nodes (Examples include, but are not limited to, MME or S-GW.) other than the base station. In the above, an example in which there is one network node other than the base station is explained; however, a combination of a plurality of other network nodes (for example, MME and S-GW) may be used.

Information, signals (information, etc.) may be output from a higher layer (or lower layer) to a lower layer (or higher layer). It may be input and output via a plurality of network nodes.

The input/output information can be stored in a specific location (for example, a memory) or can be managed in a management table. The input/output information may be overwritten, updated, or added. The information can be deleted after outputting. The inputted information can be transmitted to another device.

The determination may be based on a value represented by a single bit (0 or 1), a true or false value (Boolean: true or false), or a numerical comparison (For example, comparison with a given value).

Each of the aspects/embodiments described in the present disclosure may be used alone, in combination, or alternatively in execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if software is transmitted from a website, server, or other remote source using at least one of wired technology (Coaxial, fiber-optic, twisted-pair, and digital subscriber lines (DSL)) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

The terms described in the present disclosure and those necessary for understanding the present disclosure may be replaced with terms having the same or similar meanings. For example, at least one of a channel and a symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station may contain one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to a portion or the entire coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may also be referred to by one of ordinary skill in the art as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other appropriate term.

At least one of a base station and a mobile station may be called a transmitting device, a receiving device, a communication device, or the e like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile stat ion.

The radio frame may be composed of one or more frames in the time domain. Each frame or frames in the time domain may be called a subframe.

The subframes may also be composed of one or more slots in the time domain. The subframes may be of a fixed time length (For example, 1 ms) independent of numerology.

The numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may consist of one or more symbols (Orthogonal Frequency Division Multiplexing (OFDM)) symbols, Single Carrier Frequency Division Multiple Access (SC-FDMA) symbols, etc., in tin the time domain. A slot may be a unit of time based on the numerology.

A slot may include a plurality of minislots. Each minislot may consist of one or more symbols in the time domain. A minislot may also be called a subslot. A minislot may be composed of fewer symbols than slots. The PDSCH (or PUSCH) transmitted in time units greater than the minislot may be referred to as the PDSCH (or PUSCH) mapping type A. The PDSCH (or PUSCH) transmitted using the minislot may be referred to as the PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as the transmission time interval (TTI), multiple consecutive subframes may be referred to as the TTI, and one slot or minislot may be referred to as the TTI. That is, at least one of the subframes and the TTI may be a subframe in the existing LTE (1 ms), a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called a TTI, one or more TTIs (That is, one or more slots or one or more minislots) may be the minimum time unit for scheduling. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTIs shorter than the normal TTI may be called shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time and frequency domains and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI in length. The one TTI, one subframe, and the like may each consist of one or more resource blocks.

The one or more RBs may be called physical resource blocks (PRBs), sub-carrier groups (SCGs), resource element groups (REGs), PRB pairs, RB pairs, and the like.

The resource blocks may be composed of one or more resource elements (REs). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). For the UE, one or more BWPs may be set in one carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in the radio frame, the number of slots per subframe or radio frame, the number of minislots included in the slot, the number of symbols and RBs included in the slot or minislot, the number of subcarriers included in the RB, and the number of symbols in the TTI, the symbol length, the cyclic prefix (CP) length, and the like can be varied.

The terms "connected" and "coupled," or any variation thereof, mean any direct or indirect connection or coupling between two or more elements, and can include the presence of one or more intermediate elements between two elements "connected" or "coupled" to each other. The connection or coupling between elements may be physical, logical, or a combination thereof. For example, "connection" may be read as "access." As used in the present disclosure, two elements may be considered to be "connected" or "coupled" to each other using at least one of one or more wire, cable, and printed electrical connections and, as some non-limiting and non-inclusive examples, electromagnetic energy having wavelengths in the radio frequency, microwave, and optical (both visible and invisible) domains.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" and "second" as used in this disclosure does not generally limit the quantity or order of those elements. Such designations can be used in the present disclosure as a convenient way to distinguish between two or more elements. Accordingly, references to first and second elements do not mean that only two elements may be employed therein, or that the first element must in any way precede the second element.

In the present disclosure, the used terms "include," "including," and variants thereof are intended to be inclusive in a manner similar to the term "comprising." Furthermore, it is intended that the term "or (or)" as used in the present disclosure is not an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus

## Claims

1. A terminal comprising:
a reception unit that receives data via a downlink channel in data distribution for a plurality of terminals; and
a control unit that executes, when a number of the downlink channel exceeds a threshold in a specific time interval, a specific reception processing related to the downlink channel having the number less than or equal to the threshold, wherein
the control unit that determines downlink channel to be received by the specific reception processing based on a specific criterion.

2. The terminal according to claim 1, wherein
the specific criterion is defined based on one or more parameters selected from among a priority of the downlink channel, a method for designating the destination of the downlink channel, a reception resource of the downlink channel, a parameter related to scheduling information of the downlink channel, a method for scheduling the downlink channel, and information related to a management of a reception process or a reception buffer for the downlink channel.

3. The terminal according to claim 1, wherein
the specific criterion is defined based on the implementation of the terminal.

4. The terminal of any one of claims 1 to 3, wherein
the control unit executes a process of transmitting a negative response as feedback to the downlink channel not received in the specific reception processing.

5. A radio communication method comprising:
a step A of receiving data via a downlink channel in data distribution for a plurality of terminals; and
a step B of executing, when a number of the downlink channel exceeds a threshold in a specific time interval, a specific reception processing related to the downlink channel having the number less than or equal to the threshold, wherein
the step A includes a step of determining downlink channel to be received by the specific reception processing based on a specific criterion.
